Europäisches Patentamt

European Patent Office

Office européen des brevets

(11) Veröffentlichungsnummer: **0 156 340**
**B1**

(12) # EUROPÄISCHE PATENTSCHRIFT

(45) Veröffentlichungstag der Patentschrifft:
28.02.90

(21) Anmeldenummer: 85103466.0

(22) Anmeldetag: 23.03.85

(51) Int. Cl.⁵: **A 23 G   1/28, A 23 G   3/02**

(54) **Anlage zum Herstellen von geformten essbaren Artikeln, insbesondere von Schokoladenartikeln.**

(30) Priorität: 30.03.84 DE 3411862

(43) Veröffentlichungstag der Anmeldung:
02.10.85 Patentblatt 85/40

(45) Bekanntmachung des Hinweises auf die Patenterteilung:
28.02.90 Patentblatt 90/09

(84) Bennante Vertragsstaaten:
AT BE CH DE FR GB IT LI LU NL SE

(56) Entgegenhaltungen:
DE-A-2 919 408
FR-A-2 182 250

(73) Patentinhaber: Gebr. Bindler Maschinenfabrik GmbH &
Co. KG
Kölner Strasse 102-106
D-5275 Bergneustadt/Rhld.1 (DE)

(72) Erfinder: Bindler, Uwe, Dipl.-Ing.
Wilhelmstrasse 47
D-5275 Bergneustadt (DE)
Erfinder: Bender, Hans-Jürgen, Dipl.-Ing.
Am Gallenberg 5
D-5960 Olpe (DE)

(74) Vertreter: Patentanwaltsbüro  Cohausz & Florack
Schumannstrasse 97
D-4000 Düsseldorf 1 (DE)

## Beschreibung

Die Erfindung betrifft eine Anlage zum Herstellen von geformten eßbaren Artikeln, mit auf einer Transportbahn herangeführten Formen, in deren Formennestern sich die Artikel befinden, mit einem in der Transportbahn angeordneten Drehgestell zum Wenden der in diesem mittels Halterahmen festgehaltenen Formen, wobei das Drehgestell um eine zur Transportrichtung parallele Achse drehbar ist, und mit einer in Transportrichtung hinter dem Drehgestell angeordneten Ausschlageinrichtung zum Ausschlagen der in den Formen befindlichen Artikel.

Bei einer bekannten Anlage dieser Art wird jede Form einzeln durch Mitnehmer transportiert, die sich an umlaufenden Ketten befinden. Hierdurch ergibt sich ein verhältnismäßig großer technischer Aufwand für den Formentransport. Das Drehgestell ist mit zwei außerhalb seiner Mittelachse liegenden Halterahmen versehen derart, daß sich die Formen nach dem Wenden entsprechend jeweils in einer anderen Höhe befinden als vor dem Wenden. Auch hierdurch ergeben sich technische Nachteile, insbesondere hinsichtlich der Erzielung eines möglichst hohen Arbeitstaktes und hinsichtlich des Aufbaus der Steuerung.

Es war deshalb Aufgabe der vorliegenden Erfindung, den für den Transport und die Steuerung erforderlichen technischen Aufwand herabzusetzen und einen schnelleren Arbeitstakt erzielbar zu machen.

Zur Lösung dieser Aufgabe wird erfindungsgemäß vorgeschlagen, daß die Formen auf der Transportbahn in Transportrichtung unmittelbar aneinanderliegend im Takt verschoben werden, daß die Drehachse des Drehgestells mit der Längsmittelachse der Transportbahn bzw. der zu dieser parallelen Formenachse zumindest angenähert zusammenfällt und daß das Drehgestell mittels an seinem äußeren Umfang angreifender Lagerungen gelagert ist.

Hierdurch wird erreicht, daß sich jede Form nach dem Wenden in derselben Höhe befindet wie beim Einschieben in das Drehgestell. Der Transport der Formen unmittelbar aneinanderliegend verringert den für den Formentransport notwendigen technischen Aufwand. Es ist erfindungsgemäß sogar denkbar, das Einschieben einer Form in das Drehgestell bzw. das Ausschieben der gewendeten Form im gleichen Arbeitstakt mittels nur einer einzigen Vorschubeinrichtung erfolgen zu lassen. Während des Wendens hat die im Drehgestell befindliche Form einen noch zumindest geringen Kontakt mit den benachbarten Formen.

Im übrigen gewährleistet die Art der Lagerung des Drehgestells einen ausreichenden Freiraum für das Wenden der Formen unmittelbar im Transportbahnbereich.

Vorteilhaft ist es hierbei, wenn das Drehgestell eine Außenverzahnung aufweist, in die ein mit einem Antriebsmotor gekuppeltes Zahnrad eingreift.

Zum Entfernen der ausgeschlagenen Artikel kann erfindungsgemäß ein in das Drehgestell von der Seite her hineingeführtes Austragband dienen. Um zu ermöglichen, daß die ausgeschlagenen Artikel nur einen möglichst kurzen Fallweg zurücklegen müssen, kann das Austragband in senkrechter Richtung beweglich sein. Während des Ausschlagens wird hierbei das Austragband möglichst dicht an die gewendete Form heran angehoben. Besonders geeignet ist hierzu die Anordnung des Austragbandes an einem Kragarm, der in vertikaler Richtung beweglich ist.

Weiterhin kann das Drehgestell erfindungsgemäß so ausgebildet sein, daß es mehrere Formen gleichzeitig aufnimmt. Die Ausschlageinrichtung kann über der jeweils auszuschlagenden Form angeordnet werden und zum Ausschlagen gegebenenfalls auch in den Bereich des Drehgestells absenkbar sein. Wird das Drehgestell erfindungsgemäß zur Aufnahme von drei Formen ausgebildet, wird sich die Ausschlageinrichtung zweckmäßig über der jeweils mittleren Form befinden.

Hierbei ist es dann besonders vorteilhaft, wenn das Drehgestell durch zwei voneinander beabstandete synchron angetriebene Wenderäder gebildet ist, die die jeweils erste und dritte Form aufnehmen, und wenn die Ausschlageinrichtung feststehend angeordnet ist. Auch das Austragband kann sich zwischen den Wenderädern befinden.

Diese Ausbildung ermöglicht gleichzeitig auch in sehr günstiger Weise das Rückdrehen der jeweils ausgeschlagenen mittleren Form, nachdem letztere innerhalb des Drehgestells in das in Transportrichtung gesehen hintere Wenderad geschoben wurde. Ferner bietet diese Ausführung den Vorteil, daß zwischen den Wenderädern verhältnismäßig viel Freiraum für die Anordnung der Ausschlageinrichtung zur Verfügung steht. Mit einer einzigen Drehung um 180° wird die jeweils auszuschlagende Form gewendet, während gleichzeitig eine bereits ausgeschlagene Form in die ursprüngliche Lage zurückgewendet wird.

Es wurde bereits erwähnt, daß es für den Vorschub der Formen günstig sein kann, wenn diese auf der Transportbahn unmittelbar aneinanderliegen. Dies gilt besonders bei der Verwendung eines aus zwei Wenderädern gebildeten Drehgestells, denn die Formen können innerhalb desselben ebenfalls aneinanderliegend um jeweils eine Formenlänge im Vorschubtakt mittels eines den Formentransport auf der Transportbahn bewirkenden Antriebes verschoben werden.

Nachfolgend wird eine besonders bevorzugte Ausführungsform der Erfindung anhand einer Zeichnung näher beschrieben. Im einzelnen zeigen:

Fig. 1   eine Ansicht des Drehgestells, teilweise als Schnitt, gesehen in Richtung des Transportbahnverlaufs;

Fig. 2   einen Schnitt senkrecht zur Ansicht nach Figur 1;

Fig. 3 bis Fig. 6
          in schematischer Darstellung den Formendurchlauf im Bereich des Drehgestells in einzelnen Arbeitstakten.

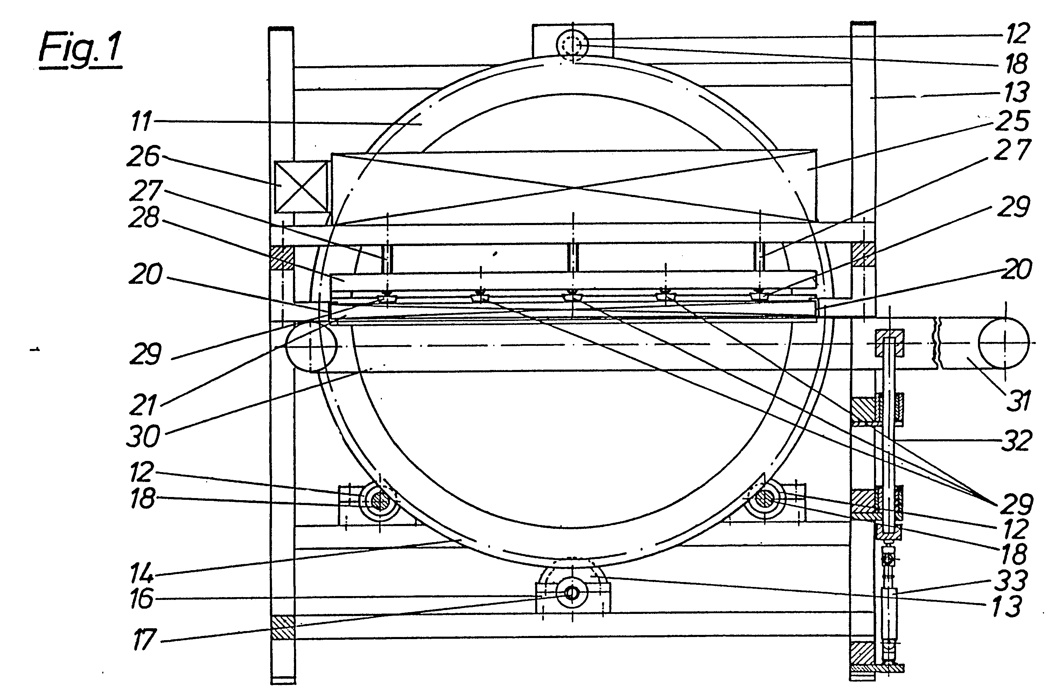

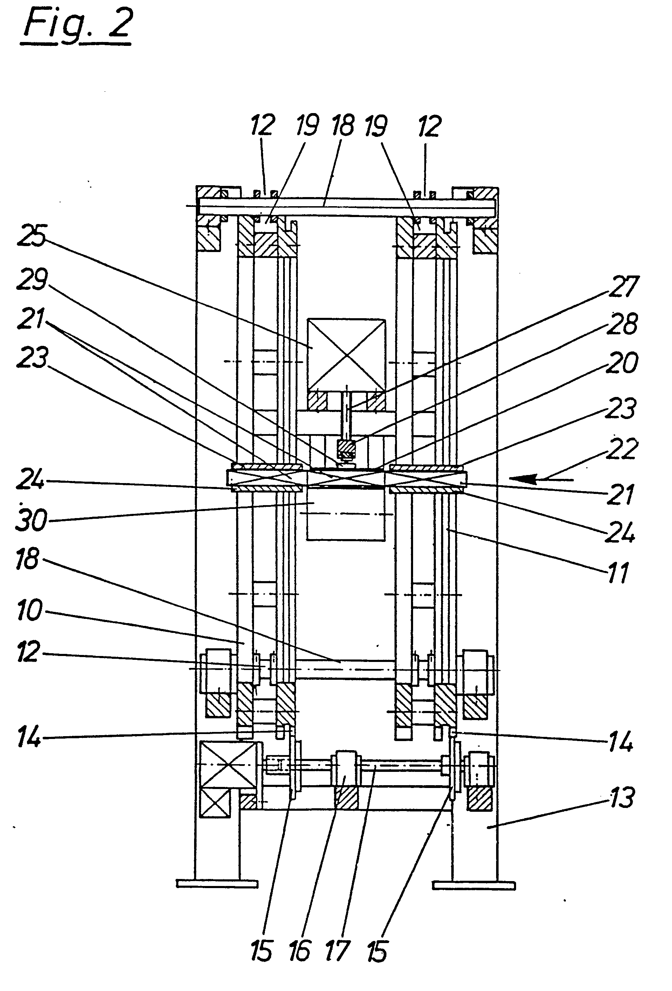

Wie Figur 1 und 2 erkennen lassen, sind zwei zueinander koaxiale Wenderäder 10 und 11 mit Hilfe von am Radumfang angreifenden Rollen 12 gelagert, wobei die Rollen 12 ihrerseits an einem Maschinenrahmen 13 angeordnet sind. Die Wenderäder 10 und 11 haben eine äußere Verzahnung 14, die jeweils mit einem Zahnrad 15 in Eingriff steht. Beide Zahnräder 15 sitzen auf einer von einem Motor 16 angetriebenen Welle 17. Die Wenderäder 10 und 11 sind somit zwangsläufig synchronisiert.

Die jeweils einem der Wenderäder 10 und 11 zugeordneten Rollen 12 sind jeweils auf einer gemeinsamen Achse 18 gelagert. Die Wenderäder 10 und 11 bilden neben ihrer Verzahnung 14 jeweils eine Nut 19, in die die Rollen 12 eingreifen, wobei sie die Wenderäder 10 und 11 in axialer Richtung fixieren. In radialer Richtung gesehen liegt der Umfang der Wenderäder 10 und 11 auf den Achsen 18 auf.

An zwei diametral gegenüberliegenden Stellen und in einer horizontalen Ebene erstrecken sich zwischen den Wenderädern 10 und 11 zwei am Maschinenrahmen 13 befestigte Führungsleisten 20. Die Führungsleisten 20 sind in einer der Transportbahnhöhe entsprechenden Höhe angeordnet, wobei die Transportbahn selbst hier nicht dargestellt ist. Die Führungsleisten 20 haben jeweils einen U-förmigen Querschnitt. Die Länge der Führungsleisten 20 entspricht der Länge einer der Formen 21. Diese werden durch eine hier nicht dargestellte Vorschubeinrichtung unmittelbar aneinanderliegend in der durch einen Pfeil 22 angedeuteten Vorschubrichtung im Arbeitstakt weiterbewegt. Vor und hinter den Führungsleisten 20 werden die Formen 21 jeweils im Bereich eines der Wenderäder 10 und 11 zwischen einer oberen Platte 23 und einer unteren Platte 24 gehalten, die den Halterahmen bilden. In dem zwischen den Wenderädern 10 und 11 liegenden Bereich befindet sich eine Ausschlageinrichtung 25, die mittels eines hydraulischen Motors 26 angetrieben wird. An Stößeln 27 ist ein quer zur Vorschubrichtung verlaufender Hammerbalken 28 befestigt, an dessen Unterseite mehrere Schlagelemente 29 angeordnet sind. Beim Ausschlagen treffen diese auf die Unterseite einer Form 21 auf.

Unterhalb der jeweils auszuschlagenden Form 21 befindet sich ein Austragband 30, das sich von der in Figur 1 rechten Seite her in den zwischen den Wenderädern 10 und 11 befindlichen Freiraum erstreckt und dessen konstruktiv tragender Teil ein Kragarm 31 ist. Letzterer ist an einem Führungsgestänge 32 gehalten, das am Maschinenrahmen 13 in vertikaler Richtung beweglich gelagert ist und an dem ein Hubzylinder 33 angreift. Durch Betätigung dieses Hubzylinders 33 kann das Austragband 30 von der in den Figuren 1 und 2 dargestellten Lage, in der es die aus einer Form 21 ausgeschlagenen Artikel aufnimmt, in eine tiefere Lage abgesenkt werden, so daß dann durch Einschalten eines hier nicht dargestellten Antriebs die ausgeschlagenen Artikel zur Seite hin wegtransportiert werden können.

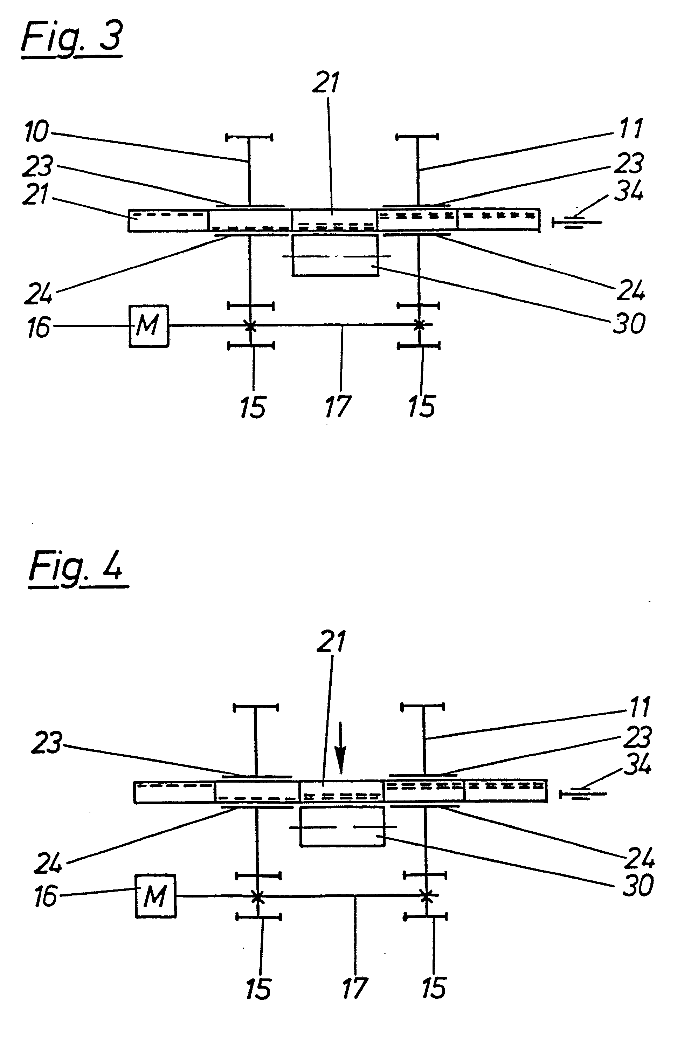

Nachfolgend soll jetzt anhand der Figuren 3 bis 6 die Funktionsweise im einzelnen erläutert werden:

Eine als Kolben-Zylinder-Anordnung ausgebildete Vorschubeinrichtung ist hier nur schematisch angedeutet und mit der Bezugsziffer 34 bezeichnet. Die im Wenderad 11 zwischen den Platten 23 und 24 befindliche Form 21 ist noch nicht gewendet, während die in den Führungsleisten 20 und im Wenderad 10 befindlichen Formen 21 bereits gewendet sind. Das Austragband 30 befindet sich unmittelbar unterhalb der mittleren Form 21.

Die in letzterer befindlichen Artikel werden durch Betätigung der Ausschlageinrichtung 25 auf das Austragband 30 ausgeschlagen, was in Figur 4 dargestellt ist.

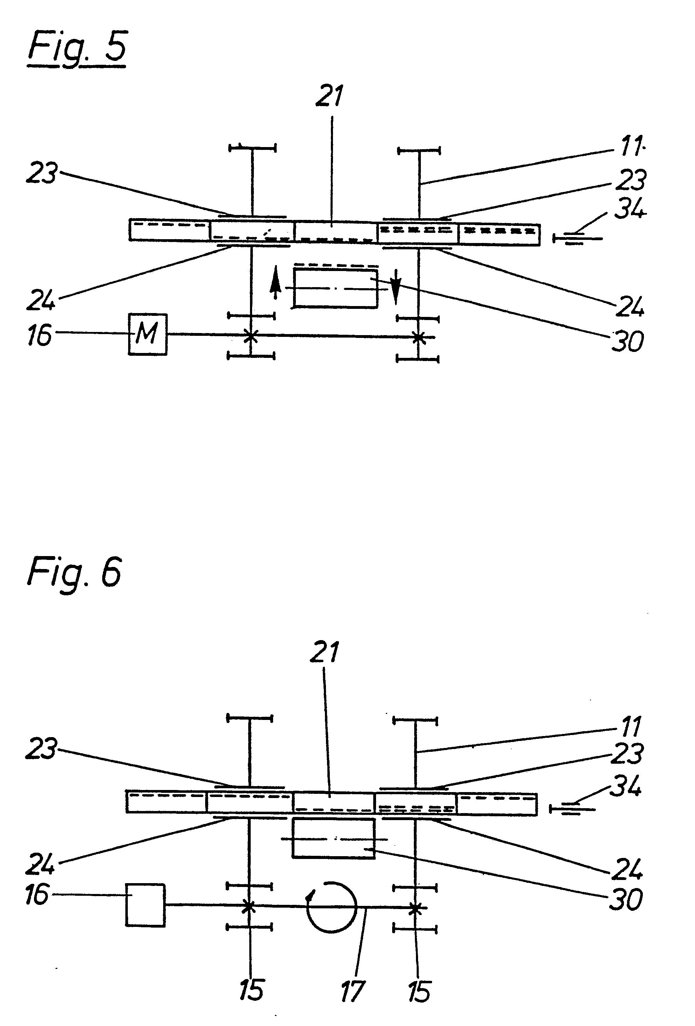

Anschließend wird das Austragband 30 abgesenkt. Die auf ihm befindlichen Artikel werden abtransportiert. Anschließend wird das Austragband 30 wieder angehoben (Figur 5).

Jetzt werden die Wenderäder 10 und 11 um 180° gedreht. Während die in den Führungsleisten 20 befindliche mittlere Form 21 hierbei ihre Position beibehält, wird die im Wenderad 11 befindliche Form 21 durch Wenden zum Ausschlagen vorbereitet, während die Form 21 im Wenderad 10 zurückgewendet wird. Anschließend wird die Vorschubeinrichtung 34 betätigt, so daß alle Formen 21 um eine Formenlänge weitertransportiert werden. Der hierdurch erreichte Zustand entspricht wieder der Darstellung nach Figur 3.

**Bezugsziffernliste:**

10 Wenderad
11 Wenderad
12 Rolle
13 Maschinenrahmen
14 Verzahnung
15 Zahnrad
16 Motor
17 Welle
18 Achse
19 Nut
20 Führungsleiste
21 Form
22 Pfeil
23 Platte
24 Platte
25 Ausschlageinrichtung
26 Motor
27 Stößel
28 Hammerbalken
29 Schlagelement
30 Austragband
31 Kragarm
32 Führungsgestänge
33 Hubzylinder
34 Vorschubeinrichtung

**Patentansprüche:**

1. Anlage zum Herstellen von geformten eßbaren Artikeln, mit auf einer Transportbahn herangeführten Formen, in deren Formennestern sich die Artikel befinden, mit einem in der Transportbahn angeordneten Drehgestell zum Wenden der in diesem mittels Halterahmen festgehaltenen Formen, wobei das Drehgestell um eine zur Transportrichtung parallele Achse drehbar ist, und mit einer in Transportrichtung hinter dem Drehgestell angeordneten Ausschlageinrichtung zum Ausschlagen der in den Formen befindlichen Artikel, dadurch gekennzeichnet, daß die Formen (21) auf der Transportbahn in Transportrichtung unmittelbar aneinanderliegend im Takt verschoben werden, daß die Drehachse des Drehgestells mit der Längsmittelachse der Transportbahn bzw. der zu dieser parallelen Formenachse zumindest angenähert zusammenfällt und daß das Drehgestell (10, 11) mittels an seinem äußeren Umfang angreifender Lagerungen (12) gelagert ist.

2. Anlage nach Anspruch 1, dadurch gekennzeichnet, daß das Ein- und/oder Ausschieben einer Form (21) in das Drehgestell (10, 11) bzw. aus diesem heraus durch die in Transportrichtung gesehen jeweils vor dem Drehgestell befindliche Form (21) erfolgt.

3. Anlage nach Anspruch 1 oder 2, dadurch gekennzeichnet, daß das Drehgestell (10, 11) eine Außenverzahnung (14) aufweist, in die ein mit einem Antriebsmotor (16) gekuppeltes Zahnrad (15) eingreift.

4. Anlage nach einem der vorherigen Ansprüche, dadurch gekennzeichnet, daß in das Drehgestell (10, 11) von der Seite her ein Austragband (30) hineinführt.

5. Anlage nach Anspruch 4, dadurch gekennzeichnet, daß das Austragband (30) in senkrechter Richtung beweglich ist.

6. Anlage nach einem der vorherigen Ansprüche, dadurch gekennzeichnet, daß das Drehgestell zur Aufnahme von zwei Formen ausgebildet ist und daß sich die Ausschlageinrichtung über der in Transportrichtung jeweils vorderen Form befindet.

7. Anlage nach einem der Ansprüche 1 bis 5, dadurch gekennzeichnet, daß das Drehgestell (10, 11, 20) zur Aufnahme von drei Formen (21) ausgebildet ist und daß sich die Ausschlageinrichtung (25) über der jeweils mittleren Form befindet.

8. Anlage nach Anspruch 7, dadurch gekennzeichnet, daß das Drehgestell durch zwei voneinander beabstandete, synchron angetriebene Wenderäder (10, 11) gebildet ist, die die jeweils erste und dritte Form (21) aufnehmen, und daß die Ausschlageinrichtung (25) und das Austragband (30) zwischen den Wenderädern angeordnet sind.

9. Anlage nach Anspruch 7 oder 8, dadurch gekennzeichnet, daß die jeweils mittlere Form (21) in dem zwischen den Wenderädern (10, 11) liegenden Bereich mittels feststehender, jeweils an einer Seite der Form (21) angreifender Führungsleisten (20) gehalten ist.

10. Anlage nach einem der vorherigen Ansprüche, dadurch gekennzeichnet, daß die Formen (21) innerhalb des Drehgestells (10, 11) und der Führungsleisten (20) aneinanderliegend um jeweils eine Formenlänge im Vorschubtakt mittels eines den Transport auf der Transportbahn bewirkenden Antriebs (34) verschoben werden.

11. Anlage nach einem der Ansprüche 8 bis 10, dadurch gekennzeichnet, daß die Ausschlageinrichtung (25) zwischen den Wenderädern (10, 11) feststehend angeordnet ist.

**Claims**

1. An installation for the production of moulded edible articles, having: moulds which are advanced over a conveying path and whose nests of moulds contain the articles; a turn-over manipulator for turning over the moulds retained therein by means of retaining frames, the manipulator being rotatable around an axis parallel with the conveying direction; and a knocking-out device, disposed downstream of the turn-over manipulator in the conveying direction, for knocking out the articles contained in the moulds, characterized in that the moulds (21) are displaced rhythmically bearing directly against one another in the conveying direction over the conveying path; the axis of rotation of the turn-over manipulator at least substantially coincides with the longitudinal central axis of the conveying path and the mould axis parallel therewith; and the turn-over manipulator (10, 11) is borne on bearings (12) engaging with its outer periphery.

2. An installation according to claim 1, characterized in that a mould (21) is introduced into the turn-over manipulator (10, 11) and removed therefrom by the mould (21) disposed upstream of the manipulator, viewed in the conveying direction.

3. An installation according to claims 1 or 2, characterized in that the turn-over manipulator (10, 11) has an external toothing (14) in which a gear wheel (15) coupled to a driving motor (16) engages.

4. An installation according to one of the preceding claims, characterized in that a remover belt (30) extends laterally into the turning over manipulator (10, 11).

5. An installation according to claim 4, characterized in that the removal belt (30) can move in the perpendicular direction.

6. An installation according to one of the preceding claims, characterized in that the turning over manipulator is constructed to receive two moulds, and the knocking-out device is disposed above the front mould, viewed in the conveying direction.

7. An installation according to one of claims 1 to 5, characterized in that the turning over manipulator (10, 11, 20) is constructed to receive three moulds (21), the knocking-out device (25) being disposed above the central mould.

8. An installation according to claim 7, characterized in that the turning over manipulator is formed by two spaced-out synchronously driven turn-over wheels (10, 11) which receive the first and third mould (21), and the knocking-out device (25) and the removing belts (30) are disposed between the turning-over wheels.

9. An installation according to claims 7 or 8, characterized in that the central mould (21) is retained in the zone between the turn-over wheels (10, 11) by means of fixed guide strips (20) each engaging with one side of the mould (21).

10. An installation according to one of the preceding claims, characterized in that the moulds (21) are displaced bearing against one another within the turn-over manipulator (10, 11) and the guide strips (20) in a feed rhythm by the length of a mould each time by means of a drive (34) which produces conveying over the conveying path.

11. An installation according to one of claims 8 to 10, characterized in that the knocking-out device (25) is disposed fixed between the turn-over wheels (10, 11).

**Revendications**

1. Dispositif pour la fabrication d'articles comestibles mis en forme avec des moules amenés sur un chemin de transport, dans les cavités desquels se trouvent les articles, avec un bâti tournant disposé dans le chemin de transport pour faire tourner les moules qui sont serrés dedans au moyen de cadres de maintien, le bâti tournant étant pivotant autour d'un axe parallèle à la direction de transport, et avec un dispositif d'éjection disposé derrière le bâti tournant en direction de transport, pour l'éjection des articles se trouvant dans les moules, caractérisé en ce que les moules (21) sont déplacés en cycles sur le chemin de transport, dans la direction de transport, immédiatement adjacents, les uns aux autres, que l'axe de rotation du bâti tournant coïncide au moins approximativement avec l'axe médian longitudinal du chemin de transport ou avec l'axe des moules parallèle à celui-ci, et que le bâti tournant (10, 11) est monté au moyen de paliers (12) en prise sur sa périphérie extérieure.

2. Dispositif selon la revendication 1, caractérisé en ce que l'entrée et/ou la sortie d'un moule (21) dans le bâti tournant (10, 11) ou hors de celui-ci respectivement se produit par le moule (21) se trouvant respectivement devant le bâti tournant vu dans la direction de transport.

3. Dispositif selon la revendication 1 ou 2, caractérisé en ce que le bâti tournant (10, 11) présente une denture extérieure (14) dans laquelle est en prise une roue dentée (15) accouplée à un moteur d'entraînement (16).

4. Dispositif selon l'une des revendications précédentes, caractérisé en ce qu'une bande d'évacuation (30) pénètre à l'intérieur du bâti tournant (10, 11) depuis le côté.

5. Dispositif selon la revendication 4, caractérisé en ce que la bande d'évacuation (30) est mobile en direction perpendiculaire.

6. Dispositif selon l'une des revendications précédentes, caractérisé en ce que le bâti tournant est formé pour recevoir deux moules et que le dispositif d'éjection se trouve au-dessus du moule respectivement en avant dans la direction de transport.

7. Dispositif selon l'une des revendications 1 à 5, caractérisé en ce que le bâti tournant (10, 11, 20) est formé pour recevoir trois moules (21) et que le dispositif d'éjection (25) se trouve au-dessus du moule respectivement médian.

8. Dispositif selon la revendication 7, caractérisé en ce que le bâti tournant est formé par deux roues tournantes (10, 11) écartées l'une de l'autre et entraînées en synchronisme, qui reçoivent respectivement le premier et le troisième moule (21), et que le dispositif d'éjection (25) et la bande d'évacuation (30) sont disposés entre les roues tournantes.

9. Dispositif selon la revendication 8 ou 9, caractérisé en ce que le moule (21) respectivement médian est maintenu dans la zone se trouvant entre les roues tournantes (10, 11) au moyen de barres de guidage (20) fixes en prise respectivement sur un côté du moule (21).

10. Dispositif selon l'une des revendications précédentes, caractérisé en ce que les moules (21) sont déplacés à l'intérieur du bâti tournant (10, 11) et des barres de guidage (20) en étant adjacents les uns aux autres sur une longueur de moule respectivement en cycles d'avance au moyen d'un entraînement (34) effectuant le transport sur le chemin de transport.

11. Dispositif selon l'une des revendications 8 à 10, caractérisé en ce que le dispositif d'éjection (25) est disposé fixe entre les roues tournantes (10, 11).

Fig.1

# Fig. 2

## Fig. 3

## Fig. 4

Fig. 5

Fig. 6